# EUROPÄISCHE PATENTSCHRIFT

(11) **EP 0 736 408 B1**
(45) Veröffentlichungstag und Bekanntmachung des Hinweises auf die Patenterteilung: **13.01.1999**
(21) Anmeldenummer: 96104275.1
(22) Anmeldetag: 18.03.1996
(51) Int. Cl.: B60K 20/02, F16H 59/04

(54) **Wählhebelanordnung für automatische Getriebe für Kraftfahrzeuge mit manueller Schaltmöglichkeit**
Control lever for automatic gearboxes of motor vehicles with alternative manual gear selection
Dispositif de levier de commande pour boîtes de vitesses automatiques de véhicules à moteur avec possibilité de sélection manuelle des vitesses

(30) Priorität: 08.04.1995 DE 19513397
(43) Veröffentlichungstag der Anmeldung: 09.10.1996
(73) Patentinhaber: Ford Global Technologies, Inc., Dearborn, Michigan 48126-2490 (US)
(72) Erfinder: DeCrouppe, Guido, 50169 Kerpen-Horrem (DE); Turner, Graeme, 53804 Much (DE)
(74) Vertreter: Messulam, Alec Moses

(56) Entgegenhaltungen:
- EP-A- 0 624 741
- EP-A- 0 629 796
- EP-A- 0 718 527
- EP-B- 0 331 797
- US-A- 4 370 897

## Beschreibung

Die Erfindung bezieht sich auf eine Wählhebelanordnung für automatische Getriebe von Kraftfahrzeugen mit einer manuellen Schaltmöglichkeit, der im Oberbegriff des Patentanspruches 1 erläuterten Art.

Die Erfindung geht von einem Wählhebel für automatische Getriebe von Kraftfahrzeugen aus, wie er in der DE-PS 43 05 015 gezeigt ist und der in einer Schaltkulisse nur in einer Ebene nach vorn oder nach hinten in die bekannten Positionen P, R, N und D sowie 2 und 1 bewegbar ist.

Aus der DE-PS 33 31 223 ist ein Schalthebel für ein automatisch schaltbares manuelles Getriebe von Kraftfahrzeugen bekannt, der nur in einer Ebene nach vorn oder nach hinten bewegbar ist und bei dem in Abhängigkeit von zwei am Handgriff des Wählhebels angeordneten Schaltern durch nach vorne oder nach hinten Verlagern des Schalthebels eine Aufwärtsschaltung bzw. eine Abwärtsschaltung eingeleitet werden kann, wobei hier nur zwischen jeweils zwei Gangstufen gewechselt werden kann, die einem Schaltbereich zugeordnet sind, der durch die Stellung der Schalter am Wählhebel vorgegeben wird.

Der bekannte Schalthebel weist damit den Nachteil auf, daß jeweils nur zwischen zwei Gangstufen gewechselt werden kann, dann erst einer der Schalter am Schalthebel betätigt werden muß, um dann zwischen den nächsten beiden Gangstufen wechseln zu können. Die angestrebte Vereinfachung einer Schaltungsbetätigung wird damit wohl kaum erreicht, da der Fahrer des Kraftfahrzeuges neben der Betätigung des Schalthebels auch noch die Betätigung von unterschiedlichen Schaltern übernehmen muß.

Aus der EP-PS 0 331 797 ist ein Wählhebel für automatische Getriebe von Kraftfahrzeugen, mit einer manuellen Schaltmöglichkeit der im Oberbegriff des Patentanspruches 1 erläuterten Art bekannt. Um jedoch die manuelle Schaltmöglichkeit wahrzunehmen, muß der Wählhebel seitlich aus der einen Ebene zur Betätigung der bekannten Positionen P, R, N und D, 3, 2 und 1 herausbewegt werden, um dann in einer parallelen Schaltkulisse in eine vordere Position "+" einen eine Aufwärtsschaltung bewirkenden Schalter betätigend und in eine hintere Position "-" einen eine Abwärtsschaltung bewirkenden Schalter betätigend bewegbar ist, wobei der Wählhebel aus diesen beiden Positionen jeweils federbelastet in seine Mittelstellung oder Neutrallage zurückgeführt wird.

Dieser bekannte Wählhebel schafft zwar eine Vereinfachung für die manuelle Schaltbetätigung, erfordert jedoch durch das seitliche Verschwenken in die zweite parallele Schaltkulisse einen erhöhten mechanischen Aufbau, der die Herstellungs- und Montagekosten erhöht.

Aus der EP 0 629 796 B2 ist eine Wählhebelanordnung für Kraftfahrzeuge, insbesondere für landwirtschaftliche Kraftfahrzeuge bekannt, bei der alle Positionen des Wählhebels in einer Ebene liegen und der einen Vorwärtsfahrbereich (F) und einen Rückwärtsfahrbereich (R) aufweist, von denen aus durch eine rückkehrende Betätigung aus der F- oder R- Neutralstellung Aufwärts- und Abwärts-Schaltanforderungen an das Getriebe ausgelöst werden können.

Die bekannte Wählhebelanordnung kann durch Ihre gleichwertig angeordneten Vorwärts- und Rückwärts-Fahrbereiche nicht für normale Straßenverkehrs-Kraftfahrzeuge, wie insbesondere Personenkraftfahrzeuge verwendet werden.

Die Aufgabe der Erfindung ist es, einen Wählhebel für automatische Getriebe von Kraftfahrzeuge, mit einer manuellen Schaltmöglichkeit, der im Oberbegriff des Patentanspruches 1 erläuterten Art zu schaffen, der bei möglichst geringem Herstellungs- und Montageaufwand eine äußerst einfache und sinngemäße Ausübung der manuellen Schaltmöglichkeit durch den Fahrer bereitstellt.

Diese Aufgabe wird gelöst, indem bei einem Wählhebel für automatische Getriebe von Kraftfahrzeugen, mit einer manuellen Schaltmöglichkeit, der im Oberbegriff des Patentanspruches 1 erläuterten Art die im Kennzeichenteil des Patentanspruches 1 aufgeführten Merkmale angewendet werden.

Dadurch, daß der Wählhebel in der Wählhebelkulisse aus der Position D nur durch Betätigen eines an sich vorhandenen Kontrollknopfes am Handgriff zum Betätigen eines federbelasteten Sperrstiftes, der mit der Kulissenkontur zusammenwirkt, nach Überwinden eines Sperrnockens in den Bereich einer weiteren Neutrallage M bringbar ist, die im Scheitel eines dachartigen Winkelabschnittes der Wählhebelkulisse ausgebildet ist und der federbelastete Sperrstift mit der Kulissenkontur und den Schrägen des dachartigen Winkelabschnittes derart zusammenwirkt, daß eine Bewegung des Wahlhebels in eine vordere Position "+" und eine Bewegung in eine hintere Position "-" federbelastet in die Neutrallage zurückgeführt wird, wird mit minimalem Änderungs-Aufwand ein Wählhebel für automatische Getriebe von Kraftfahrzeugen geschaffen, der eine äußerst einfache und sinngemäß zu bedienende manuelle Schaltmöglichkeit bereitstellt.

Im Anspruch 2 ist eine zweckmäßige Weiterbildung der Erfindung erläutert.

Die Erfindung wird in Zusammenhang mit einer in den Zeichnungen gezeigten Ausführungsform näher erläutert. Es zeigt:

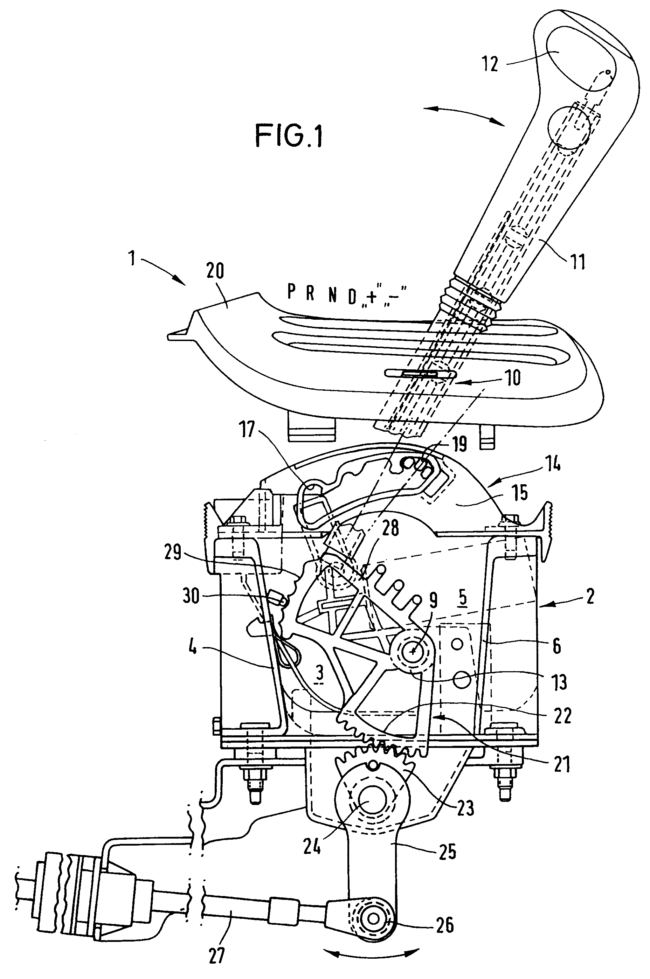

- Fig. 1: eine vertikale Seitenansicht einer Wählhebelanordnung gemäß der Erfindung, in der durch Weglassen von Teilen der Seitenwand 3 die erfindungswesentlichen Bauteile hervorgehoben sind;

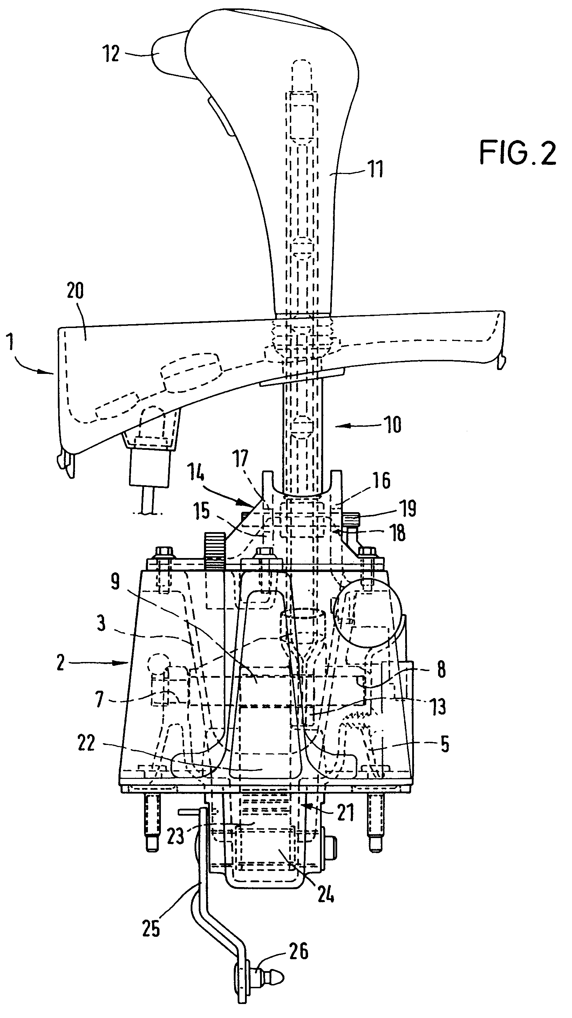

- Fig. 2: eine vertikale Rückansicht der Wählhebelanordnung in Fig. 1 und
- Fig. 3: eine vergrößerte Darstellung der erfindungswesentlichen Bauteile der Wählhebelkulisse.

Eine Wählhebelanordnung 1 für ein automatisches Getriebe eines Kraftfahrzeuges besteht im wesentlichen aus einem am Fahrzeugboden (nicht gezeigt) befestigbaren Wählhebelgehäuse 2, das aus einem entsprechend hochwertigen Kunststoffmaterial im Spritzguß hergestellt wird. Das domartige Wählhebelgehäuse 2 weist etwa vertikale Seitenwände 3, 4, 5 und 6 auf, von denen die beiden seitlichen Seitenwände 3 und 5 Lageröffnungen 7 und 8 für eine horizontale Querachse 9 aufweisen.

Ein Wählhebel 10 weist oben einen Handgriff 11 mit einem Kontrollknopf 12 auf und ist unten mit einem Lagerungsbauteil 13 verbunden, mittels dem er auf der horizontalen Querachse 9 schwenkbar gelagert ist.

Das domartige Wählhebelgehäuse 2 ist oben von einem parallelwandigen Rastenbauteil 14 überdeckt, in dessen Seitenwänden 15 und 16 Rastkulissen 17 und 18 angeordnet sind, die mit einer Rastvorrichtung in Form eines horizontalen Rastbolzens 19 zusammenwirken, der über eine entsprechende Verbindung (nur in gestrichelten Linien angedeutet) vom Kontrollknopf 12 her beeinflußbar ist.

Die Wählhebelanordnung wird zum Fahrzeuginnenraum hin durch eine Abdeckblende 20 in stilistisch gefälliger Weise abgedeckt.

Soweit die Wählhebelanordnung bisher beschrieben wurde, entspricht sie im wesentlichen einem herkömmlichen Aufbau, wobei das Lagerungsbauteil 13 sowohl sich oberhalb der horizontalen Querachse 9 als auch unterhalb erstreckende Arme aufweisen kann, die zum Anschluß der Bowdenzugverbindungen zum automatischen Getriebe herangezogen werden können, wobei je nachdem, ob die Bowdenzuganordnung oberhalb oder unterhalb der horizontalen Querachse 9 angeordnet wird, keine oder aber eine Umlenkung der Wählbewegungsrichtung auftritt.

Der Lagerungsbauteil 13 ist hierbei mit einer Verbindungsanordnung 21 verbunden, die aus einem am Lagerungsbauteil 13 ausgebildeten ersten Zahnsegment 22 besteht, das mit einem zweiten Zahnsegment 23 in Eingriff steht, das in einer unteren horizontalen Querachse 24 angeordnet ist, die in Teilbereichen der sich nach unten erstreckenden Seitenwände 3 und 5 des Wählhebelgehäuses 2 schwenkbar aufgenommen ist. An der unteren horizontalen Querachse 24 ist drehfest ein Hebelarm 25 angeordnet, an dessem unteren Ende 26 die Bowdenzugverbindung 27 zum automatischen Getriebe angelenkt ist.

Am Lagerungsbauteil 13 ist noch ein sich nach oben erstreckendes Nockensegment 28 mit einer Anzahl von Rasten 29 vorgesehen, die mit einer Federraste 30 zusammenwirken, um die Wählhebelpositionen genauer festzulegen.

Die bisher beschriebene Wählhebelanordnung entspricht der Wählhebelanordnung, die den Ausgangspunkt der vorliegenden Erfindung darstellt und die in der DE-PS 43 05 015 beschrieben ist.

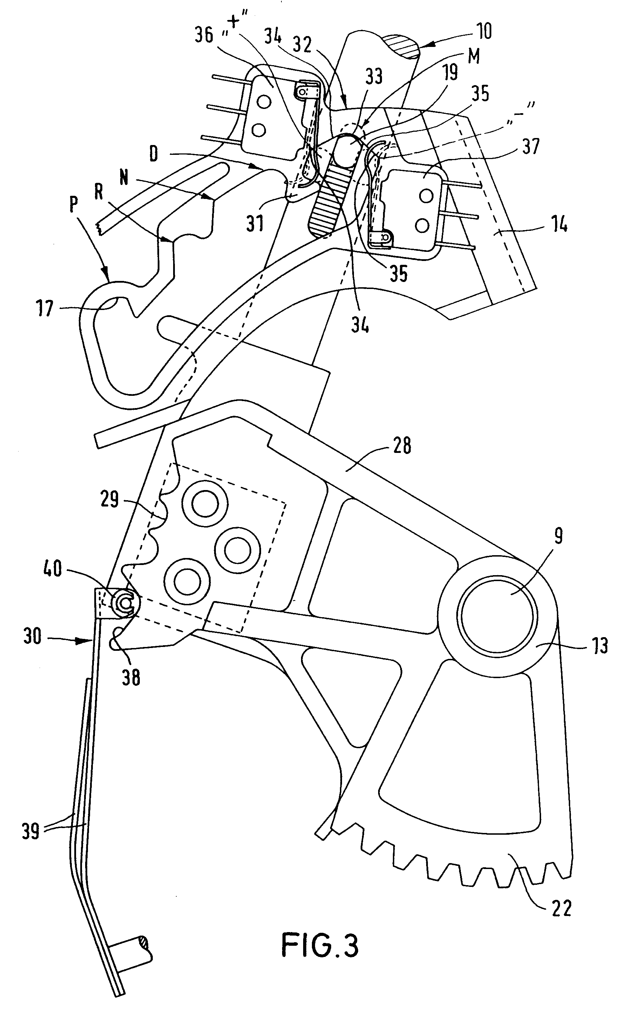

Abweichend von dieser bekannten Ausführungsform weist die erfindungsgemäße Wählhebelanordnung Änderungen in der Rastkulisse und in der Rastanordnung auf, die nachfolgend im Zusammenhang mit der vergrößerten Darstellung in Fig. 3 näher erläutert werden.

Gemäß der Erfindung ist die in dem parallelwandigen Rastenbauteil 14, in dessen Seitenwänden 15 und 16 ausgebildeten Rastkulissen 17 und 18, die mit einem horizontalen Rastbolzen 19 zusammenwirken, in besonderer Weise ausgebildet, die nunmehr erläutert wird.

Die Rastausnehmungen der Rastkulisse bleiben in den Bereichen für die Wählhebelpositionen P, R, N und D unverändert und lediglich im Bereich der früheren Schaltpositionen 2 und 1 wird eine Änderung vorgenommen.

Die früheren Schaltpositionen 2 und 1 konnten erst durch Betätigen des Kontrollknopfes 12 am Handgriff 11 des Wählhebels 10 angewählt werden. Der hierfür vorgesehene Sperrnocken ist mit 31 bezeichnet. Anschließend an den Sperrnocken 31 schließt sich gemäß der Erfindung ein dachartiger Winkelabschnitt 32 an, ausgehend von dessen Scheitel 33 sich zwei Schrägen 34 und 35 anschließen.

Der federbelastete Rastbolzen 19 drängt in die Scheitelposition 33 des dachartigen Winkelabschnittes 34, 35 der Rastkulissen 17 und 18 und hält hierdurch den Wählhebel in seiner weiteren Neutrallage M.

Wird der Wählhebel aus seiner Neutrallage M in eine vordere Position "+" bewegt, so betätigt er einen Endschalter 36, der zum Auslösen einer Aufwärtsschaltung vorgesehen ist. Wird der Wählhebel in eine hintere Position "-" bewegt, so betätigt er einen Endschalter 37, der zum Auslösen einer Abwärtsschaltung vorgesehen ist. Sobald die Handbetätigungskraft am Wählhebel aufhört, führt der federbelastete Rastbolzen 19 infolge der Schrägen 34 und 35 den Wählhebel wieder in seine Neutrallage M zurück.

Es kann sein, daß die zur Betätigung des Rastbolzens 19 vorgesehene Federkraft aus Komfortgründen nicht so hoch gewählt werden kann, daß eine erwünschte schnelle Rückführung des Wählhebels in die Neutrallage M mit der gewünschten Kraft erfolgen kann, daher wird gemäß einer Weiterbildung der Erfindung vorgeschlagen, an dem am Lagerungsbauteil 13 vorhandenen Nockensegment 28 mit den Rasten 29 und der Federraste 30 die letzte der Rasten 38, die funktionsmäßig dem dachartigen Winkelabschnitt 33, 34 und 35 in der Rastkulisse entspricht, entsprechend angepaßt auszubilden und mit einer durch eine Doppelfederanordnung 39 verstärkte Rastrolle 40 zusammenwirken zu lassen, die die erwünschte sichere Rückstellbewegung des Wählhebels in seine Neutrallage M bewerkstelligt.

Die eigentliche Steuerung des automatischen Getriebes von Kraftfahrzeugen mit einer manuellen Schaltmöglichkeit ist nicht unmittelbarer Gegenstand der Erfindung. Es ist jedoch selbstverständlich, daß die vom Fahrer durch Betätigung des Wählhebels nach vorne oder nach hinten gewünschten Aufwärtsschaltungen oder Abwärtsschaltungen vor einer Ausführung durch das elektrohydraulische Steuerungssystem des automatischen Getriebes dahingehend überprüft werden, ob sie ohne Beschädigung des Getriebes durchgeführt werden können. Das heißt, eine bei hoher Geschwindigkeit durch mehrmaliges Antippen des Wählhebels nach hinten, geforderte mehrfache Abwärtsschaltung wird nicht in einem Zuge durchgeführt sondern in einer Sequenz von aufeinanderfolgenden Schaltungen, sobald die entsprechende Geschwindigkeit des Kraftfahrzeuges erreicht ist, bei der die entsprechende Abwärtsschaltung ohne Gefahr einer Beschädigung des Getriebes erfolgen kann. Das gleiche gilt sinngemäß für Aufwärtsschaltungen, die durch eine Vielzahl von Tippbewegungen nach vorne gewünscht werden.

## Patentansprüche

1. Wählhebelanordnung für automatische Getriebe von Kraftfahrzeugen, mit einer manuellen Schaltmöglichkeit, mit einem in einer Schaltkulisse nur in einer Ebene nach vorn oder nach hinten in die Positionen P, R, N und D bewegbaren Wählhebel (10), der anschließend an die Position D in eine weitere Neutrallage M bringbar ist, aus der er in eine vordere Position "+", einen eine Aufwärtsschaltung bewirkenden Schalter (36) betätigend und in eine hintere Position "-", einen eine Abwärtsschaltung bewirkenden Schalter (37) betätigend unter federbelasteter Rückkehrbewegung bringbar ist,
**dadurch kennzeichnet,** daß alle Positionen sich in einer Ebene befinden,
- der Wählhebel (10) in einer Rastkulisse (17, 18) aus der Position D nur durch Betätigen eines Sperrknopfes (12) am Handgriff (11) zum Betätigen eines federbelasteten Sperrstiftes (19), der mit der Rastkulisse (17, 18) zusammenwirkt, nach Überwinden eines Sperrnockens (31) in den Bereich der weiteren Neutrallage M bringbar ist,
- an der Rastkulisse (17, 18) die weitere Neutrallage M durch einen dachartigen Winkelabschnitt (32) ausgebildet ist und
- der federbelastete, mit der Rastkulisse (17, 18) zusammenwirkende Sperrstift (19) in Neutrallage M im Scheitel (33) des Winkelabschnittes (32) steht und nach Verlagerung nach vorn "+" oder nach hinten "-" durch die Schrägen (34, 35) des Winkelabschnittes (32) federbelastet in die Neutrallage M zurückgestellt wird.

2. Wählhebelanordnung nach Anspruch 1,
**dadurch kennzeichnet,** daß
- an einem Lagerungsbauteil (13) im Bereich eines Nockensegmentes (28) mit einer Anzahl von Rasten (29) und einer Federraste (30) die der weiteren Neutrallage M entsprechende letzte Raste (38) eine Rückkehrbewegung des federbelasteten Sperrstiftes (19) unterstützend ausgebildet ist und mit einer Doppelfederanordnung (39) und einer Rastrolle (40) zusammenwirkt.

## Claims

1. A selector lever system for automatic transmissions for motor vehicles, having a manual selection facility, comprising a selector lever (10) which is movable forwards or backwards in a gear selection gate in only one plane into the P, R, N and D positions and can be brought into a further neutral position M, adjacent the D position, from which it can be brought into a forward position "+" actuating a switch (36) effecting an upshift and into a rear position "-" actuating a switch (37) effecting a downshift, with its return movement being spring-loaded, characterised in that
- all positions are in a plane;
- the selector lever (10) can only be brought from the D position into the vicinity of the further neutral position M in a notched gate (17, 18) after overcoming a blocking cam (31) by operating a blocking knob (12) on the handle (11) to actuate a spring-loaded locking pin (19) which cooperates with the notched gate (17, 18);
- the further neutral position M is formed on the notched gate (17, 18) by a roof-shaped angle section (32); and
- in the neutral position M the spring-loaded locking pin (19) which cooperates with the notched gate (17, 18) lies in the apex (33) of the angle section (32), and after displacement forwards "+" or backwards "-" is returned into the neutral position M, under spring loading, by the slopes (34, 35) of the angle section (32).

2. A selector lever system according to claim 1, characterised in that
- on a mounting member (13), in the region of a cam segment (28) having a plurality of notches (29) and a spring catch (30), the last notch (38), corresponding to the further neutral position (M), is formed so as to assist a return movement of the spring-loaded locking pin (19) and cooperates with a double spring mechanism (39) and a roller detent (40).

## Revendications

1. Mécanisme de levier de vitesses pour boîtes de vitesses automatiques de véhicules à moteur, avec possibilité de passage manuel des vitesses, comprenant un levier de vitesses (10) pouvant être déplacé dans une coulisse de changement de vitesses dans un plan uniquement, vers l'avant ou vers l'arrière, entre les positions P, R, N et D, qui peut être mis au-delà de la position D dans une seconde position neutre M à partir de laquelle il peut être déplacé vers l'avant dans une position "+", dans laquelle il actionne un levier (36) permettant de passer à la vitesse supérieure, et vers l'arrière dans une position "-", dans laquelle il actionne un levier (37) provoquant le passage à la vitesse inférieure, ces deux mouvements s'accompagnant d'un mouvement de retour commandé par ressort, caractérisé en ce que toutes les positions se situent dans un même plan, en ce que le levier de vitesses (10) ne peut être déplacé dans une coulisse à crans (17, 18) de la position D dans la zone de la seconde position neutre M qu'en actionnant un bouton de déblocage (12) sur le manche (11) destiné à actionner une broche à déclic à ressort (19) qui coopère avec la coulisse à crans (17, 18), après avoir vaincu une saillie de blocage (31), en ce que, sur la coulisse à crans (17, 18), la seconde position neutre M est matérialisée par un élément coudé en forme de toit (32), et en ce que la broche à déclic à ressort (19) qui coopère avec la coulisse à crans (17, 18) se trouve, dans la position neutre M, dans l'angle (33) de l'élément coudé (32) et, après avoir été déplacée vers l'avant "+" ou vers l'arrière "-", est ramenée sous action ressort dans la position neutre M par les segments en biais (34, 35) de l'élément coudé (32).

2. Mécanisme de levier de vitesses pour boîtes de vitesses automatiques selon la revendication 1, caractérisé en ce que, sur un élément de support (13), dans la zone d'un segment à came (28) comportant plusieurs crans (29) et un taquet d'enclenchement à ressort (30), le dernier cran (38) correspondant à la seconde position neutre M est réalisé de manière à assister le mouvement de retour de la broche à déclic chargée par ressort (19) et coopère avec un ressort double (39) et un galet d'enclenchement (40).
